# EUROPEAN PATENT APPLICATION

(11) **EP 1 924 095 A1**
(43) Date of publication of application: **21.05.2008**
(21) Application number: 06796788.5
(22) Date of filing: 25.08.2006
(51) Int. Cl.: H04N 7/173, G06F 13/00, G06F 21/20, G06F 21/24, G09G 5/00

(54) **SIGNAL SOURCE DEVICE**

(30) Priority: 26.08.2005 JP 2005245607
(71) Applicant: MATSUSHITA ELECTRIC INDUSTRIAL CO., LTD., Osaka 571-8501 (JP)
(72) Inventor: KOMENO, Junichi c/o Matsushita Electric Industrial Co.,Ltd., 2-1-61, Shiromi,Chuo-ku Osaka-shi, Osaka 540-6207 (JP)
(74) Representative: Eisenführ, Speiser & Partner
(86) International application number: PCT/JP2006/316715
(87) International publication number: WO 2007/023939

(57) **Abstract**

A DVD player (100) of a signal source device generates a video signal and an audio signal, and outputs the signals to a plasma display unit (200) of a signal sink device. The DVD player (100) outputs the video signal and the audio signal to the plasma display unit (200) via a transmission line in conformity with an HDMI standard after elapsing a predetermined waiting time, which is set to be longer than a time required for an initial start setting process by the plasma display unit (200), after completion of equipment authentication with the plasma display unit (200).

## Description

### TECHNICAL FIELD

The present invention relates to a signal source device, which generate at least one of a video signal and an audio signal and output the same signals to a signal sink device via a transmission line in conformity with a predetermined standard, and a method of controlling the signal source device.

### BACKGROUND ART

There has been conventionally proposed a source device such as a DVD player and a method of controlling the same, which reproduce contents, generate a digital video signal and a digital audio signal, and transmit to output the same signals to a video output unit such as a liquid crystal display unit and an audio output unit such as a digital loudspeaker (for example, See Patent Documents 1 to 3 or the like).

In late years, there has been proposed a high-definition multimedia interface (referred to as an HDMI hereinafter) standard which is an interface standard for transmitting a digital video signal and a digital audio signal from a source device such as a DVD player and a set-top box to a sink device such as a liquid crystal display unit and a projector. The AV equipments adopting the HDMI standard have been in widespread use in the market. In the HDMI standard, high-bandwidth digital content protection (referred to as an HDCP hereinafter) authentication is adopted for copyright protection of contents.

Patent Document 1: Japanese patent laid-open publication No. JP-2000-312317-A.
Patent Document 2: Japanese patent laid-open publication No. JP-2000-217071-A.
Patent Document 3: Japanese patent laid-open publication No. JP-5-328239-A.

### DISCLOSURE OF THE INVENTION

### PROBLEMS TO BE SOLVED BY THE INVENTION

However, according to the source device and the method of controlling the same related to the prior art, the signal source device outputted a video signal and an audio signal to the signal sink device regardless of whether or not the HDCP authentication had been completed between the signal source device and the signal sink device, and whether or not an initial start setting process such as setting of audio output sampling and setting of video output resolution in the signal sink device had been completed. Therefore, in a system configured with the signal source device (referred to as an HDMI source device hereinafter) adopting the HDMI standard and a signal sink device (referred to as an HDMI sink device hereinafter) adopting the HDMI standard, there is a problem in that, if the video signal and the audio signal are transmitted from the HDMI source device to the HDMI sink device when the HDCP authentication and the above initial setting process have not been completed, the HDMI sink device cannot receive a head part of the video signal and the audio signal, and video data and audio data included in the head part cannot be outputted from a display and a loudspeaker of the HDMI sink device.

An object of the present invention is to solve the foregoing problem and to provide a signal source device, a method of controlling the same, and an executable program by a computer, which can certainly output at least one of a video signal and an audio signal from a head part thereof to a signal sink device as compared with the prior art.

### MEANS FOR SOLVING THE PROBLEM

According to a first aspect of the present invention, there is provided a signal source device for generating at least one of a video signal and an audio signal, and outputting the video signal and the audio signal to a signal sink device via a transmission line in conformity with a predetermined standard. The signal source device includes control means, which outputs at least one of the video signal and the audio signal to the signal sink device after completion of equipment authentication with the signal sink device.

In the above-mentioned signal source device, the signal source device outputs at least one of the video signal and the audio signal to the signal sink device via a signal repeater unit. The control means outputs at least one of the video signal and the audio signal to the signal sink device after completion of equipment authentication between the signal source device and the signal sink device and equipment authentication between the signal repeater unit and the signal sink device.

In addition, in the above-mentioned signal source device, the control means outputs at least one of the video signal and the audio signal to the signal sink device after elapsing a predetermined waiting time, which is set to be longer than a time required for an initial start setting process by the signal sink device, after completion of the equipment authentication.

Further, in the above-mentioned signal source device, the control means receives data including at least one of identification information, video output specifications, and audio output specifications of the signal sink device, and determines the predetermined waiting time on the basis of the received data.

Still further, the above-mentioned signal source device further includes input means, which inputs the predetermined waiting time to the signal source device.

In addition, the above-mentioned signal source device further includes non-image silent signal generating means, which generates a non-image silent signal having predetermined specifications, and outputs the non-image silent signal to the signal sink device. The control means generates the non-image silent signal after completion of the equipment authentication, controls the non-image silent signal generating means to output the non-image silent signal to the signal sink device, and controls the non-image silent signal generating means to stop generation and output of the non-image silent signal after elapsing the waiting time.

According to a second aspect of the present invention, there is provided a method of controlling a signal source device for generating at least one of a video signal and an audio signal, and outputting the signals to a signal sink device via a transmission line in conformity with a predetermined standard. The method includes a step of outputting at least one of the video signal and the audio signal to the signal sink device after completion of equipment authentication with the signal sink device.

The method of controlling the signal source device further includes a step of outputting at least one of the video signal and the audio signal to the signal sink device via signal repeater unit. The method further includes a step of outputting at least one of the video signal and the audio signal to the signal sink device after completion of equipment authentication between the signal source device and the signal sink device, and equipment authentication between the signal repeater unit and the signal sink device.

In addition, method of controlling the signal source device further includes a step of outputting at least one of the video signal and the audio signal to the signal sink device after elapsing a predetermined waiting time, which is set to be longer than a time required for an initial start setting process by the signal sink device, after completion of the equipment authentication.

Further, the method of controlling the signal source device further includes a step of receiving data including at least one of identification information, video output specifications, and audio output specifications of the signal sink device, and determining the predetermined waiting time on the basis of the received data.

Still further, the method of controlling the signal source device further includes a step of inputting the predetermined waiting time to the signal source device.

In addition, the method of controlling the signal source device further includes a step of generating a non-image silent signal having predetermined specifications after completion of the equipment authentication, and outputting the non-image silent signal to the signal sink device. The method further includes a step of stopping generation and output of the non-image silent signal after elapsing the waiting time.

According to a third aspect of the present invention, there is provided a program which can be executed by a computer. The program includes the respective steps of the above-mentioned method of controlling the signal source device.

### EFFECTS OF THE INVENTION

According to the signal source device and the method of controlling the signal source device according to the present invention, the signal source device outputs at least one of a video signal and an audio signal to the signal sink device after completion of equipment authentication with the signal sink device. Then at least one of the video signal and the audio signal can be certainly outputted from the head part thereof to the signal sink device as compared with the prior art. Further, according the program which can be executed by a computer according to the present invention, the program including the respective steps of the method of controlling the above signal source device can be provided.

### BRIEF DESCRIPTION OF THE DRAWINGS

Fig. 1 is a block diagram showing a configuration of a DVD player 100, a remote controller 90, and a plasma display unit 200 according to a first embodiment of the present invention;
Fig. 2 is a flow chart showing a contents transmission processing executed by the controller 10 shown in Fig. 1;
Fig. 3 is a block diagram showing a configuration of a DVD player 100, a remote controller 90, an AV amplifier 300, and a plasma display unit 200 according to a second embodiment of the present invention; and
Fig. 4 is a flow chart showing a contents transmission processing executed by the controller 10 shown in Fig. 3.

### EXPLANATIONS OF REFERENCE NUMERALS

- 10 ...: Controller,
- 11, 21, 61, and 81 ...: CPU,
- 12, 22, 62, and 82...: RAM,
- 13, 23, 63, and 83...: ROM,
- 14 ...: Waiting time memory,
- 15 ...: Timer circuit,
- 16, 25, 66, and 86: ... Bus,
- 20, 60, and 80 ...: HDMI chip,
- 24, 65, and 85 ...: Interface,
- 30 ...: Decoder,
- 31 ...: Non-image silent signal generator circuit,
- 40 ...: DVD drive,
- 50 ...: DVD,
- 51 ...: Remote-control signal optical-detector circuit,
- 64 and 84 ...: EDID memory,
- 71 ...: Video signal processing circuit,
- 72 ...: Display,
- 73 ...: Audio signal processing circuit,
- 74 and 89 ...: Loudspeaker,
- 88...: Audio signal amplifier,
- 90...: Remote controller,
- 91 ...: Remote-control signal transmitter circuit,
- 100 ...: DVD player,
- 101, 201, 301, and 302 ...: HDMI connector,
- 200 ...: Plasma display unit,
- 300 ...: AV amplifier, and
- 401, 402, and 403 ...: HDMI cable

### BEST MODE FOR CARRYING OUT THE INVENTION

Embodiments according to the present invention will be described hereinafter with reference to the drawings. In addition, the same reference numerals are given to those similar to constitutional elements.

### FIRST EMBODIMENT

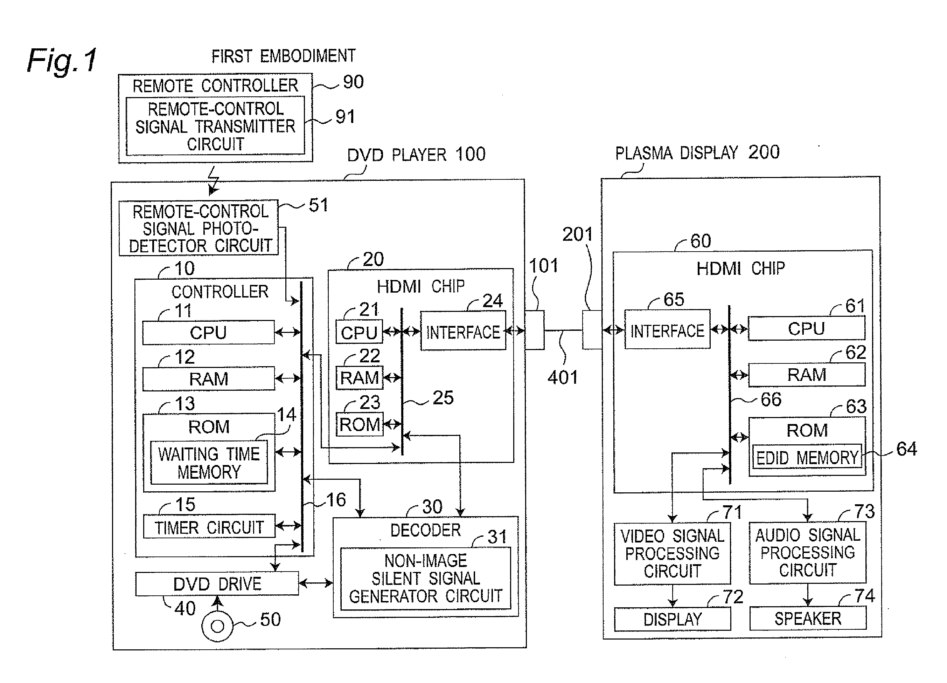

Fig. 1 is a block diagram showing a configuration of a DVD player 100, a remote controller 90, and a plasma display unit 200 according to a first embodiment of the present invention.

Referring to Fig. 1, the DVD player 100 which is an HDMI source device (the signal source device adopting the HDMI standard) is connected to the plasma display unit 200 which is an HDMI sink device (the signal sink device adopting the HDMI standard) via an HDMI connector 101, an HDMI cable 401, and an HDMI connector 201. In this case, the HDMI cable 401 is a digital data transmission bus in conformity with the HDMI standard, and the HDMI connectors 101 and 201 are a data terminal in conformity with the HDMI standard. Referring to Fig. 1, it is
characterized in that the DVD player 100 which is the HDMI source device includes a controller 10 which outputs a video signal and an audio signal to the plasma display unit 200 after HDCP authentication with the plasma display unit 200 has been completed.

Furthermore, the remote controller 90 includes a remote-control signal transmitter circuit 91, generates a predetermined remote-control signal on the basis of contents reproduction indication or the like from users, and performs optical wireless transmission to a remote-control signal optical-detector circuit 51 of the DVD player 100.

Referring to Fig. 1, the DVD player 100 includes the controller 10, an HDMI chip 20, a decoder 30 provided with a non-image silent signal generator circuit 31, a DVD drive 40, a DVD 50, the remote-control signal optical-detector circuit 51, and the HDMI connector 101. In this case, the controller 10, the HDMI chip 20, the decoder 30, the DVD drive 40, and the remote-control signal optical-detector circuit 51 are connected with each other via a bus 16 of the controller 10 and a bus 25 of the HDMI chip 20.

The controller 10 is provided for controlling whole operation of the DVD player 100 and includes a central processing unit (referred to as a CPU hereinafter) 11, a random access memory (referred to as a RAM hereinafter) 12, a read only memory (referred to as a ROM hereinafter) 13 having a waiting time memory 14, and a timer circuit 15, which are connected with each other via the bus 16. The CPU 11 is a computer for controlling the whole operation of the DVD player 100, and executes a software program or the like such as contents transmission processing or the like, which will be described in detail later. The ROM 13 preliminarily stores a program executable by a computer, for various kinds of software required for operating the DVD player 100 and software such as the contents transmission processing executed by the CPU 11 to be described in detail later. The ROM 13 includes a waiting time memory 14, which preliminarily stores a waiting time table representing a relationship between a manufacturer of the plasma display unit 200 and the waiting time required from a timing of generating a video signal and an audio signal by reproducing contents of the DVD 50 to a timing of outputting the same signals to the plasma display unit, after completing HDCP authentication between the HDMI chip 20 and an HDMI chip 60. In this case, the waiting time is a long time value as compared with a time required for an initial start setting process such as audio output sampling setting, video output specifications setting, and the like which are executed by the plasma display unit 200 before receiving the contents. The waiting time has a value of 0.5 seconds to 1.0 second depending on the manufacturer of the plasma display unit 200. Furthermore, a RAM 12 is made of a SRAM, a flash memory, or the like, used as a working area of the CPU 11, and stores temporary data generated upon executing the programs. The timer circuit 15 starts counting the time in response to a control signal from the CPU 11 representing the waiting start and a predetermined waiting time. When the waiting time has elapsed, the timer circuit 15 generates a waiting completion signal representing the completion of the waiting time, and outputs the same signal to the CPU 11.

In the DVD player 100 shown in Fig. 1, the HDMI chip 20 executes an interface process for interfacing with the plasma display unit 200 via the HDMI connector 101, the HDMI cable 401, and the HDMI connector 201 and an authentication process for performing HDCP authentication with the plasma display unit 200. The HDMI chip 20 includes a CPU 21, a RAM 22, a ROM 23, and an interface 24 which are connected with each other via the bus 25. The ROM 23 is required for operating the HDMI chip 20 and stores programs of various kinds of software executed by the CPU 21. Furthermore, the RAM 22 is made of a SRAM, a flash memory, or the like, used as a working area of the CPU 21, and stores temporary data generated upon executing the programs. The interface 24 executes the interface process with the plasma display unit 200, and outputs a signal and data in conformity with the HDMI standard to the plasma display unit 200 via the HDMI connector 101, the HDMI cable 401., and the HDMI connector 201. On the other hand, the interface 24 receives a signal inputted from the plasma display unit 200 via the HDMI connector 201, the HDMI cable 401, and the HDMI connector 101, executes the predetermined interface process including signal conversion and protocol conversion, and outputs the same signal to the CPU 21.

Furthermore, the operation of the decoder 30 is controlled by the CPU 11. The decoder 30 reproduces the contents stored in the DVD 50 using the DVD drive 40, outputs the same signal to the CPU 11 or the CPU 21, generates a black image signal having a predetermined specifications and a non-image silent signal including a silent signal, and outputs the same signals to the CPU 21. In this case, the black image signal is a video signal where a value of a luminance signal is 10h (hexadecimal notation) and a value of a color-difference signal is 80h (hexadecimal notation). The silent signal is an audio signal where a sound volume value is 00h (hexadecimal notation).

The remote-control signal optical-detector circuit 31 receives a remote-control signal from the remote controller 90, and outputs the same signal to the CPU 11.

Referring to Fig. 1, the plasma display unit 200 includes the HDMI chip 60, a video signal processing circuit 71, a display 72, an audio signal processing circuit 73, a loudspeaker 74, and the HDMI connector 201. In this case, the HDMI chip 60, the video signal processing circuit 71, and the audio signal processing circuit 73 are connected with each other via a bus 66 of the HDMI chip 60. The HDMI chip 60 executes the following:
(a) an interface process for interfacing with the DVD player 100 via the HDMI connector 201, the HDMI cable 401, and the HDMI connector 101;
(b) an authentication process for performing HDCP authentication with the DVD player 100;
(c) a video signal output process for outputting a video signal from the DVD player 100 to the display 72 via the video signal processing circuit 71 and displaying the same signal thereon; and
(d) an audio signal output process for outputting an audio signal from the DVD player 100 to the loudspeaker 74 via the audio signal processing circuit 73.
   The HDMI chip 60 includes a CPU 61, a RAM 62, and a ROM63 provided with extended display identification data (referred to as an EDID hereinafter) memory 64, and an interface 65, which are connected with each other via the bus 66. The ROM63 is required for operating the HDMI chip 60, preliminarily stores various kinds of software programs executed by the CPU 61, and includes the EDID memory 64 which preliminarily stores data such as product information of the plasma display unit 200, a manufacturer name, a video encoding method (for example, RGB, YC_{B}C_{R} 4:4:4 or YC_{B}C_{R} 4:2:2), resolution, field frequency, video output specifications such as the number of scanning lines, and audio output specifications such as audio output sampling. Furthermore, the RAM 62 is made of a SRAM, a flash memory, or the like, used as a working area of the CPU 61, and stores temporary data generated upon executing the programs. The interface 65 executes the interface process with the DVD player 100 and outputs a signal and data in conformity with the HDMI standard to the DVD player 100 via the HDMI connector 201, the HDMI cable 401, and the HDMI connector 101. On the other hand, the interface 65 receives a signal inputted from the DVD player 100 via the HDMI connector 101, the HDMI cable 401, and the HDMI connector 201, executes the predetermined interface process including signal conversion and protocol conversion, and outputs the same signal to the CPU 61.

Furthermore, the video signal processing circuit 71 converts a video signal inputted from the DVD player 100 via the HDMI connector 101, the HDMI cable 404, and the HDMI connector 201 to a video display signal having predetermined specifications, outputs the same signal to the display 72, and displays the same signal thereon. Further, the audio signal processing circuit 73 performs D/A conversion and amplification of an audio signal inputted from the DVD player 100 via the HDMI connector 101, the HDMI cable 404, and the HDMI connector 201, and outputs the same signal to the loudspeaker 74.

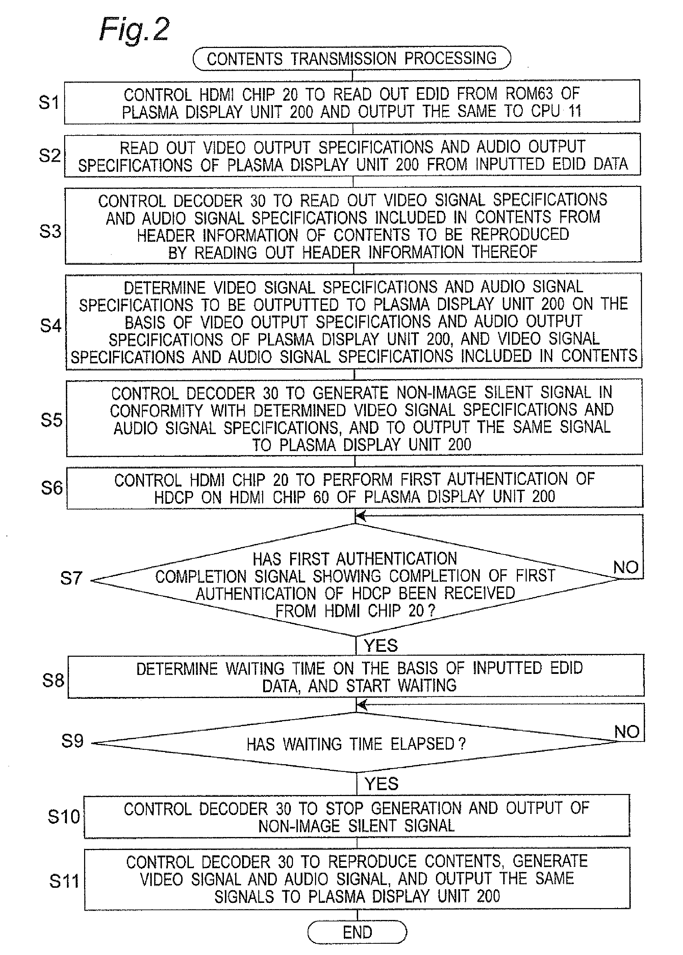

Fig. 2 is a flow chart showing a contents transmission processing executed by a controller 10 shown in Fig. 1.

In the contents transmission processing shown in Fig. 2, first of all, in step S1, the HDMI chip 20 is controlled to read out EDID from the EDID memory 64 of the ROM63 of the plasma display unit 200, and to outputs the same EDID to the CPU 11. In response to this, the HDMI chip 20 reads out the EDID stored in the EDID memory 64, and outputs the same EDID to the CPU 11. Then, in step S2, the video output specifications and the audio output specifications of the plasma display unit 200 are read out from inputted EDID data. After that, in step S3, the decoder 30 is controlled to read out video signal specifications and audio signal specifications included in contents from header information of the contents to be reproduced by reading out the header information thereof. In response to this, the decoder 30 outputs data of the video signal specifications and the audio signal specifications included in the contents to be reproduced to the CPU 11. In this case, the header information of the contents includes data which are a video encoding method of the video signal included in the contents (for example, RGB, YC_{B}C_{R} 4:4:4 or YC_{B}C_{R} 4:2:2), resolution, a field frequency, the number of scanning lines or the like, and audio output sampling of the audio signal, and the like. Further in step S4, the video signal specifications and the audio signal specifications to be outputted to the plasma display unit 200 are determined on the basis of the video output specifications and the audio output specifications of the plasma display unit 200 read out in step S2 and the video signal specifications and the audio signal specifications included in the contents read out in step S3. For example, in such a case that the video signal specifications included in the contents is "1920×10801" and the video output specifications connected to the plasma display unit 200 is "1280×720p", the video signal specifications to be outputted to the plasma display unit 200 is determined as "1280×720p". Furthermore, for example, in such a case that the audio output sampling of the audio signal included in the contents is 48kHz and the audio output sampling of the plasma display unit 200 is 44.1kHz, the audio output sampling of the audio signal to be outputted to the plasma display unit 200 is determined as 44.1kHz. Next, in step S5, the decoder 30 is controlled to generate a non-image silent signal having the video signal specifications and the audio signal specifications determined in step S4, and to output the same signal to the plasma display unit 200. In response to this, the decoder 30 generates a non-image silent signal and outputs the same signal to the CPU 61 of the plasma display unit 200 via the HDMI chip 20, the HDMI connector 101, the HDMI cable 401, and the HDMI connector 201. The CPU 61 outputs a black image signal included in the inputted non-image silent signal to the display 72 via the video signal processing circuit 71, displays the same signal thereon, and outputs the silent signal to the loudspeaker 74 via the audio signal processing circuit 73.

Next, in step S6, the HDMI chip 20 is controlled to perform a first authentication of the HDCP on the HDMI chip 60 of the plasma display unit 200. In response to this, the HDMI chip 20 performs the first authentication of the HDCP with the HDMI chip 60. When the authentication is completed, the HDMI chip 20 generates a first authentication completion signal representing the completion of the HDCP first authentication and outputs the same signal to the CPU 11. Then, in step S7, it is judged whether or not the CPU 11 has received the above first authentication completion signal from the HDMI chip 20. If YES in step S7, the process proceeds to step S8. On the other hand, if NO, the process returns to step S7.

Next, in step S8, a waiting time is determined with reference to a waiting time table stored in the waiting time memory 4 on the basis of manufacturer data of the plasma display unit 200 included in the inputted EDID in step S2, and a control signal representing the waiting start and the waiting time is generated and outputted to the timer circuit 15, then starting waiting. In response to a control signal from the CPU 11, the timer circuit 15 starts timing. Next, in step S9, it is judged whether or not the waiting time has elapsed by whether or not a waiting completion signal from the timer circuit 15 has been received. If YES in step S9, the process proceeds to step S10. On the other hand, if NO, the process returns to step S9.

Waiting is completed in step S10, and the decoder 30 is controlled to stop generation and output of the non-image silent signal. In response to this, the decoder 30 stops the generation and output of the non-image silent signal. Next, in step 811, the decoder 30 is controlled to reproduce the contents, generate the video signal and the audio signal having the video signal specifications and the audio signal specifications determined in step S5, and output the same signals to the plasma display unit 200, then the contents transmission processing is completed. In response to this, the decoder 30 reproduces the contents, generates the video signal and the audio signal, and outputs the same signals to the CPU 61 of the plasma display unit 200 via the HDMI chip 20, the HDMI connector 101, the HDMI cable 401, and the HDMI connector 201. The CPU 61 outputs the inputted video signal to the display 72 via the video signal processing circuit 71, displays the same signal thereon, and outputs the audio signal to the loudspeaker 74 via the audio signal processing circuit 73.

In this case, the time required for performing the process of steps S1 to S5 shown in Fig. 2 is approximately 1 second, the time required for performing the first authentication process of the HDCP in step S6 is approximately 3 seconds, and the waiting time which is longer than a time required for executing an initial start setting process before receiving the contents by the plasma display unit 200 is 0.5 to 1.0 second. Therefore, the time required from a timing of starting contents reproducing processing to a timing of outputting the video signal and the audio signal included in the contents in the plasma display unit 200 is approximately 4.5 to 5.5 seconds. Conventionally, the source device transmitted contents to the sink device regardless of whether or not the HDCP authentication had been completed between the source device such as a DVD player and the sink device such as a plasma display unit, and whether or not the initial start setting process had been completed in the sink device. Therefore, the source device could not output by receiving data of approximate 4.5 to 5.5 seconds in a head part of the contents. However, according to the configured DVD player 100, the CPU 11 determines the waiting time on the basis of the EDID data preliminarily stored in the EDID memory 64 of the plasma display unit 200 after completion of the HDCP authentication between the HDMI chip 20 and the HDMI chip 60, and transmits the contents to the plasma display unit 200 after the waiting time has elapsed. Then the video signal and the audio signal included in the contents can be certainly outputted from the head part to the display 72 and the loudspeaker 74 of the plasma display unit 200 as compared with the prior art. Furthermore, the CPU 11 makes the decoder 30 generate the non-image silent signal during waiting and controls to output the same signal to the plasma display unit 200. Then, any video distortion is not generated in the display 72 of the plasma display unit 200, and any sound-jumpiness is not caused in the loudspeaker 74.

In the above embodiment, the CPU 11 determines the waiting time with reference to the waiting time table representing a relationship between the manufacturer data of the plasma display unit 200 and the waiting time after completion of the HDCP authentication between the HDMI chip 20 and the HDMI chip 60. However, the present invention is not limited to this, but it may be a predetermined waiting time indicated to the CPU 11 by a user using the remote controller 90, a predetermined waiting time preliminarily stored in the ROM 13, and a predetermined waiting time determined on the basis of the other EDID data stored in the EDID memory 64. The waiting time may be a time value which is longer than the time required for performing the initial start setting process executed before receiving the contents by the plasma display unit 200.

In the above embodiment, the DVD player 100 outputs a video signal to the display 72 of the plasma display unit 200, displays the same signal thereon, and outputs an audio signal to the loudspeaker 74. However, the present invention is not limited to this, but one of the video signal and the audio signal may be outputted to the plasma display unit 200.

### SECOND EMBODIMENT

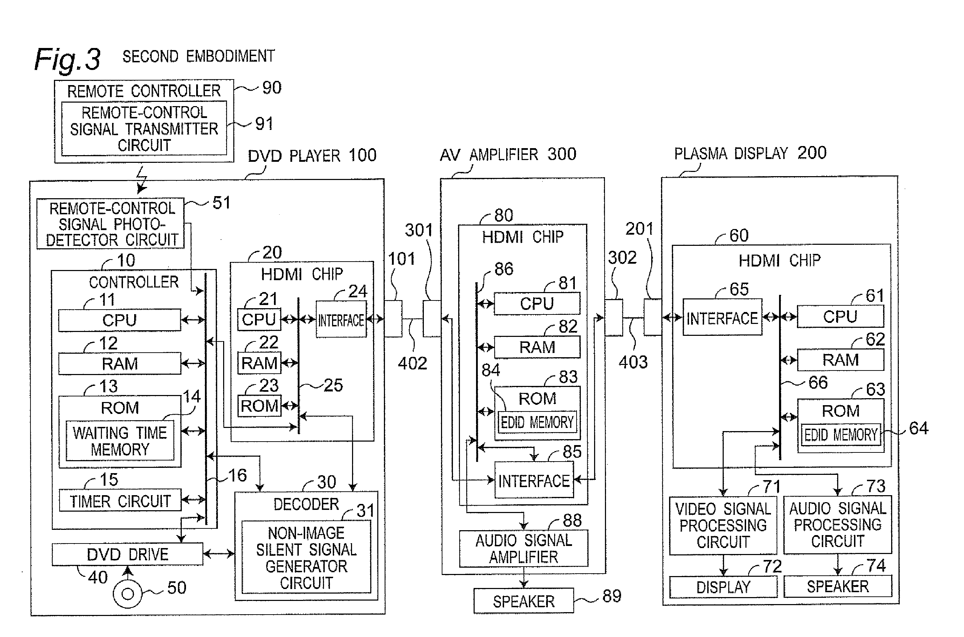

Fig. 3 is a block diagram showing a configuration of a DVD player 100, a remote controller 90, an AV amplifier 300, and a plasma display unit 200 according to a second embodiment of the present invention.

Referring to Fig. 3, the DVD player 100 which is an HDMI source device is connected to the AV amplifier 300 which is a signal repeater unit (referred to as an HDMI repeater unit hereinafter) adopting the HDMI standard via an HDMI connector 101, an HDMI cable 402, and an HDMI connector 301. The AV amplifier 300 is connected to the plasma display unit 200 which is an HDMI sink device via an HDMI connector 302, HDMI cables 403, and an HDMI connector 201. In this case, the HDMI cables 402 and 403 are a digital data transmission bus in conformity with the HDMI standard, and the HDMI connectors 301 and 302 are a data terminal in conformity with the HDMI standard. This embodiment is characterized in that, as compared with the first embodiment shown in Fig. 1, a CPU 11 of the DVD player 100 determines a waiting time on the basis of manufacturer data of the plasma display unit 200, outputs a video signal included in contents to a display 72 of the plasma display unit 200 via the AV amplifier 300 and displays the same signal thereon after elapsing the waiting time after completion of process of HDCP authentication between the DVD player 100 and the AV amplifier 300 and HDCP authentication between the AV amplifier 300 and the plasma display unit 200, and outputs an audio signal included in the contents to a loudspeaker 89 via the AV amplifier 300. The different points from the first embodiment will be described in detail hereinafter.

Referring to Fig. 3, the AV amplifier 300 includes an HDMI chip 80, an audio signal amplifier 88 connected to the loudspeaker 89, and the HDMI connectors 301 and 302. In this case, an HDMI chip 60 and the audio signal amplifier 88 are connected with each other via a bus 86 of the HDMI chip 80. The HDMI chip 80 executes the following:
(a) an interface process for interfacing with the DVD player 100 via the HDMI connector 301, the HDMI cable 402, and the HDMI connector 101;
(b) an interface process for interfacing with the plasma display unit 200 via the HDMI connector 302, the HDMI cable 403, and the HDMI connector 201;
(c) an authentication process for performing HDCP authentication with the DVD player 100 and the plasma display unit 200;
(d) a video signal relay process for outputting a video signal from the DVD player 100 to the plasma display unit 200; and
(e) an audio signal output process for outputting an audio signal from the DVD player 100 to the loudspeaker 89 via the audio signal amplifier 88.
   The HDMI chip 80 includes a CPU 81, a RAM 82, a ROM 83 provided with an EDID memory 84, and an interface 85, which are connected with each other via the bus 86. The ROM 83 is required for operating the HDMI chip 80, preliminarily stores various kinds of software programs executed by the CPU 81, and includes the EDID memory 84 which preliminarily stores data such as EDID stored in an EDID memory 64 of the plasma display unit 200, product information of the AV amplifier 300, a manufacturer name, and audio output specifications such as audio output sampling. Furthermore, the RAM 82 is made of a SRAM, a flash memory, or the like, used as a working area of the CPU 81, and stores temporary data generated upon executing the programs. The interface 85 executes the interface process with the DVD player 100 and outputs signals and data in conformity with the HDMI standard to the DVD player 100 via the HDMI connector 301, the HDMI cable 402, and the HDMI connector 101.. On the other hand, the interface 85 receives a signal inputted from the DVD player 100 via the HDMI connector 7.01, the HDMI cable 402, and the HDMI connector 301, executes the predetermined interface process including signal conversion and protocol conversion, and outputs the same signal to the CPU 81. Further, the interface 85 executes the interface process with the plasma display unit 200 and outputs signals and data in conformity with the HDMI standard to the plasma display unit 200 via the HDMI connector 302, the HDMI cable 403, and the HDMI connector 201. On the other hand, the interface 85 receives a signal inputted from the plasma display unit 200 via the HDMI connector 201, the HDMI cable 403, and the HDMI connector 302, executes the predetermined interface process including signal conversion and protocol conversion, and outputs the same signal to the CPU 81. Furthermore, the audio signal amplifier 88 performs D/A conversion and amplification of an inputted audio signal and outputs the same signal to the loudspeaker 89.

Referring to Fig. 3, the waiting time memory 14 preliminarily stores a waiting time table, which shows a relationship between manufacturer data of the plasma display unit 200 and a waiting time after completion of the HDCP authentication between an HDMI chip 20 and the HDMI chip 80 and the HDCP authentication between the HDMI chip 80 and the HDMI chip 60, in the waiting time memory 14. In this case, the waiting time is a time value which is longer than the time required for performing an initial start setting process such as setting of video output specifications for executing before receiving contents by the plasma display unit 200. The waiting time has a value of 0.5 to 1.0 second in accordance with manufacturer of the plasma display unit 200.

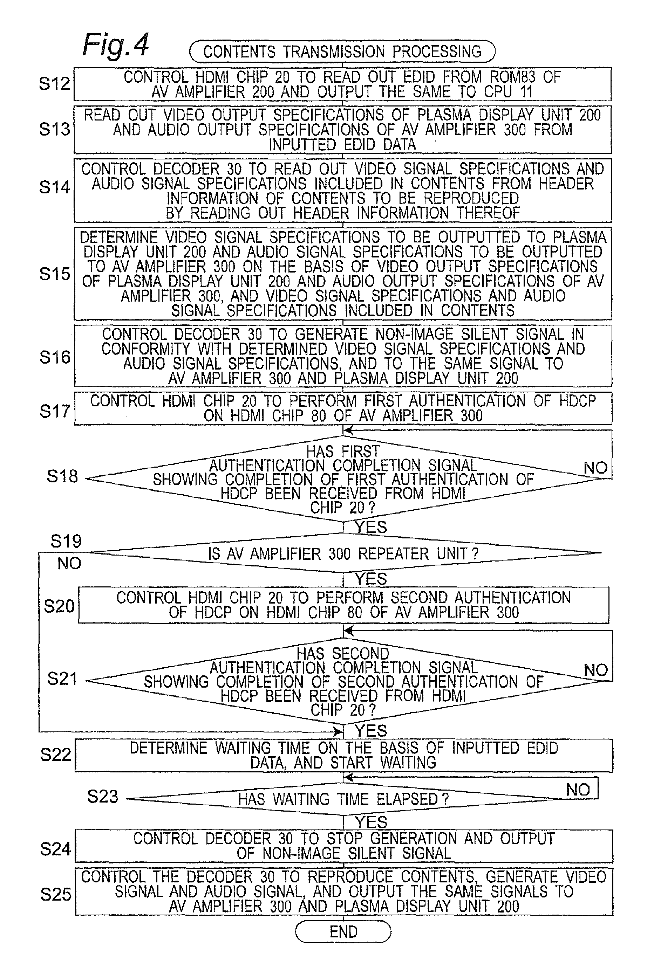

Fig. 4 is a flow chart showing a contents transmission processing executed by the controller 10 shown in Fig. 3.

In the contents transmission processing shown in Fig. 4, first of all, in step S12, the HDMI chip 20 is controlled to read out EDID from the EDID memory 84 of the ROM 83 of the AV amplifier 300, and to output the same EDID to the CPU 11. In response to this, the HDMI chip 20 reads out the EDID stored in the EDID memory 84 and output it to the CPU 11. Then, in step S 13, the video output specifications of the plasma display unit 200 and the audio output specifications of the AV amplifier 300 are read out from inputted EDID data. After that, in step S14, the decoder 30 is controlled to read out video signal specifications and audio signal specifications included in the contents from header information of the contents to be reproduced by reading out the header information thereof. In response to this, the decoder 30 outputs data of the video signal specifications and the audio signal specifications included in the contents to be reproduced to the CPU 11. In this case, the header information of the contents includes data which are a video encoding method of the video signal included in the contents (for example, RGB, YC_{B}C_{R} 4:4:4 or YC_{B}C_{R} 4:2:2), resolution, a field frequency, the number of scanning lines or the like, and audio output sampling of the audio signal, and the like. Further, in step S15, the video signal specifications to be outputted to the plasma display unit 200, and the audio signal specifications to be outputted to the AV amplifier 300 are determined on the basis of the video output specifications of the plasma display unit 200 and the audio output specifications of the AV amplifier 300 read out in step S 13, and the video signal specifications and the audio signal specifications included in the contents read out in step S14. For example, in the case where the video signal specifications included in the contents is "1020x1080i" and the video output specifications connected to the plasma display unit 200 is "1280×720p", the video signal specifications to be outputted to the plasma display unit 200 is determined as "1280×720p". Furthermore, for example, in the case where the audio output sampling of the audio signal included in the contents is 48kHz and the audio output sampling of the audio signal to be outputted to the AV amplifier 300 is 44.1kHz, the audio output sampling of the audio signal to be outputted to the AV amplifier 300 is determined as 44.1kHz. Next, in step S16, the decoder 30 is controlled to generate a non-image silent signal having the video signal specifications and the audio signal specifications determined in step S15, and to output the same signal to the AV amplifier 300 and the plasma display unit 200. In response to this, the decoder 30 generates a non-image silent signal and outputs the same signal to the CPU 81 of the AV amplifier 300 via the HDMI chip 20, the HDMI connector 101, the HDMI cable 402, and the HDMI connector 301. The CPU 81. outputs a silent signal included in the inputted non-image silent signal to the loudspeaker 89 via an audio signal amplifier 88. The CPU 81 outputs a black image signal included in the inputted non-ixnage silent signal to the CPU 61 of the plasma display unit 200 via the HDMI connector 302, the HDMI cable 403, and the HDMI connector 201. The CPU 61 outputs the inputted black image signal to the display 72 via the video signal processing circuit 71 and displays the same signal thereon.

Next, in step 51.7, the HDMI chip 20 is controlled to perform a first authentication of the HDCP on the HDMI chip 80 of the AV amplifier 300. In response to this, the CPU 21 of the HDMI chip 20 performs the first authentication of the HDCP with the HDMI chip 80. Further, when the first authentication of the HDCP with the HDMI chip 20 is completed, the CPU 81 of the HDMI chip 80 performs the first authentication of the HDCP with the HDMI chip 60, generates a first authentication completion signal, and outputs the same signal to the CPU 21. Further, in response to the first authentication completion signal from the CPU 81, the CPU 21 generates the first authentication completion signal representing the completion of the first authentication of the HDCP between the HDMI chip 20 and the HDMI chip 80 and completion of the first authentication of the HDCP between the HDMI chip 80 and the HDMI chip 60, and outputs the same signal to the CPU 11. Then, in step S18, it is judged whether or not the CPU 11 has received the above first authentication completion signal from the HDMI chip 80. If YES in step S18, the process proceeds to step S19. On the other hand, if NO, the process returns to step S18.

In this case, the HDMI chip 20 has an HDCP authentication resistor not shown in the drawing. When the HDMI chip 20 performs the first authentication of the HDCP with the HDMI chip 80, a resistor value representing whether or not the AV amplifier 300 is the HDMI repeater unit is written on a predetermined bit of the HDCP authentication resistor. In step S19, the CPU 11 reads out a resistor value of the predetermined bit of the HDCP authentication resistor of the HDMI chip 20, and then, it is judged whether or not the AV amplifier 300 is the HDMI repeater unit. If YES, the process proceeds to step S20. On the other hand, if NO, the process proceeds to step S22.

Next, in step S20, the HDMI chip 20 is controlled to perform a second authentication of the HDCP on the HDMI chip 80 of the AV amplifier 300. In response to this, the HDMI chip 20 performs the second authentication of the HDCP with the HDMI chip 80. When the authentication is completed, the HDMI chip 20 generates a second authentication completion signal representing the completion of the second authentication of the HDCP, and outputs the same signal to the CPU 11. Then, in step S21, it is judged whether or not the CPU 11 has received the above second authentication completion signal from the HDMI chip 20. If YES in step S21, the process proceeds to step S22. On the other hand, if NO, the process returns to step S21.

Next, in step S22, a waiting time is determined with reference to a waiting time table stored in the waiting time memory 4 on the basis of manufacturer data of the plasma display unit 200 included in the inputted EDID in step S13, and a control signal representing the waiting start and the waiting time is generated and outputted to a timer circuit 15, then starting waiting. In response to a control signal from the CPU 11, the timer circuit 15 starts timing. Next, in step S23, it is judged whether or not the waiting time has elapsed by whether or not a waiting completion signal from the timer circuit 15 has received. If YES in step S23, the process proceeds to step S24. On the other hand, if NO, the process returns to step S23.

Waiting is completed in step S24, and the decoder 30 is controlled to stop generation and output of the non-image silent signal. In response to this, the decoder 30 stops the generation and output of the non-image silent signal. Next, in step S25, the decoder 30 is controlled to reproduce the contents, generate the video signal and the audio signal having the video signal specifications and the audio signal specifications determined in step S15, and output the same signals to the plasma display unit 200, then the contents transmission processing is completed. In response to this, the decoder 30 reproduces the contents to generate the video signal and the audio signal, and outputs the same signals to the CPU 81 of the AV amplifier 300 via the HDMI chip 20, the HDMI connector 101, the HDMI cable 402, and the HDMI connector 301. The CPU 81 outputs the inputted audio signal to the loudspeaker 89 via the audio signal amplifier 88, and outputs the inputted video signal to the CPU 61 of the plasma display unit 200 via the HDMI connector 302, the HDMI cable 403, and the HDMI connector 201. The CPU 61 outputs the inputted video signal to the display 72 via the video signal processing circuit 71, and displays the same signal thereon.

In this case, the time required for performing the process of steps S12 to S16 shown in Fig. 4 is approximately 1 second, the time required for performing the first authentication process of the HDCP between the HDMI chip 20 and the HDMI chip 80 and between the HDMI chip 80 and the HDMI chip 60 in step S18 is approximately total 6 seconds, the time required for performing the second authentication of the HDCP in step S20 is approximately 0.1 seconds, and the waiting time in step S23 is 0.5 to 1.0 second. Therefore, the time required from a timing of starting contents reproducing processing to a timing of outputting the video signal and the audio signal included in the contents in the plasma display unit 200 and the AV amplifier 300 is approximately 7.6 to 8.6 seconds. According to the DVD player 100, the CPU 11 determines the waiting time on the basis of EDID data preliminarily stored in the EDID memory 64 of the plasma display unit 200 after completion of the HDCP authentication between the HDMI chip 20 and the HDMI chip 80 and HDCP authentication between the HDMI chip 80 and the HDMI chip 60, and transmits the contents to the plasma display unit 200 after elapsing the waiting time. Then, the video signal included in the contents can be certainly outputted from the head part to the display 72 and the loudspeaker 74 of the plasma display unit 200 as compared with the prior art, and the audio signal included in the contents can also be certainly outputted from the head part to the loudspeaker 89 connected to the AV amplifier 300 as compared with the prior art. Furthermore, the CPU 11 makes the decoder 30 generate the non-image silent signal during waiting and controls to output the same signal to the AV amplifier 300 and the plasma display unit 200. Then any sound-jumpiness is not caused in the loudspeaker 89 connected to the AV amplifier 300, and any video distortion is not generated in the display 72 of the plasma display unit 200.

In the above embodiment, the CPU 11 determines the waiting time on the basis of EDID data stored in the EDID memory 84. However, the present invention is not limited to this, but the EDID stored in the EDID memory 64 is read out via the AV amplifier 300, and then the waiting time may be determined on the basis of the EDID data.

In the above embodiment, the DVD player 100 outputs a video signal to the display 72 of the plasma display unit 200, displays the same signal thereon, and outputs an audio signal to the loudspeaker 89 via the AV amplifier 300. However, the present invention is not limited to this, but an audio signal may be outputted to the loudspeaker 74 of the plasma display unit 200 and at least one of the video signal and the audio signal may be outputted to the plasma display unit 200, in a manner similar to that of the first embodiment.

In the first embodiment, the DVD player 100 which is the HDMI source device outputs a video signal and an audio signal to the plasma display unit 200 which is the HDMI sink device via the HDMI cable 401. In the second embodiment, the DVD player 100 outputs an audio signal to the AV amplifier 300 which is the HDMI repeater unit via the HDMI cable 402 and also outputs a video signal and an audio signal to the plasma display unit 200 via the HDMI cable 402, the AV amplifier 300, and the HDMI cable 403. However, the present invention is not limited to this, but it may be a signal source device such as a digital television signal receiving unit, a digital still camera, and a digital video camera, a signal sink device such as a liquid crystal display unit and a projector, and the other signal repeater unit.

Furthermore, in the above respective embodiments, the non-image silent signal includes the black image signal. However, the present invention is not limited to this, but it may be an image signal of a color other than black.

### INDUSTRIAL APPLICABILITY

As described above, according to the signal source device and the method of controlling the same according to the present invention, the signal source device outputs at least one of a video signal and an audio signal to the signal sink device after completion of equipment authentication with the signal sink device. Then at least one of the video signal and the audio signal can be certainly outputted from the head part thereof to the signal sink device as compared with the prior art. Furthermore, according the program which can be executed by a computer according to the present invention, the program including the respective steps of the method of controlling the above signal source device can be provided.

## Claims

1. A signal source device for generating at least one of a video signal and an audio signal, and outputting the video signal and the audio signal to a signal sink device via a transmission line in conformity with a predetermined standard, the signal source device comprising:
control means, which outputs at least one of the video signal and the audio signal to the signal sink device after completion of equipment authentication with the signal sink device.

2. The signal source device as claimed in claim 1,
wherein the signal source device outputs at least one of the video signal and the audio signal to the signal sink device via a signal repeater unit; and
wherein the control means outputs at least one of the video signal and the audio signal to the signal sink device after completion of equipment authentication between the signal source device and the signal sink device and equipment authentication between the signal repeater unit and the signal sink device.

3. The signal source device as claimed in claims 1 or 2,
wherein the control means outputs at least one of the video signal and the audio signal to the signal sink device after elapsing a predetermined waiting time, which is set to be longer than a time required for an initial start setting process by the signal sink device, after completion of the equipment authentication.

4. The signal source device as claimed in claim 3,
wherein the control means receives data including at least one of identification information, video output specifications, and audio output specifications of the signal sink device, and determines the predetermined waiting time on the basis of the received data.

5. The signal source device as claimed in claim 3, further comprising input means, which inputs the predetermined waiting time to the signal source device.

6. The signal source device as claimed in any one of claims 1 to 5, further comprising non-image silent signal generating means, which generates a non-image silent signal having predetermined specifications, and outputs the non-image silent signal to the signal sink device,
wherein the control means generates the non-image silent signal after completion of the equipment authentication, controls the non-image silent signal generating means to output the non-image silent signal to the signal sink device, and controls the non-image silent signal generating means to stop generation and output of the non-image silent signal after elapsing the waiting time.

7. A method of controlling a signal source device for generating at least one of a video signal and an audio signal, and outputting the signals to a signal sink device via a transmission line in conformity with a predetermined standard, the method including the following step of:
outputting at least one of the video signal and the audio signal to the signal sink device after completion of equipment authentication with the signal sink device.

8. The method of controlling the signal source device as claimed in claim 7, further including the following steps of:
outputting at least one of the video signal and the audio signal to the signal sink device via signal repeater unit; and
outputting at least one of the video signal and the audio signal to the signal sink device after completion of equipment authentication between the signal source device and the signal sink device, and equipment authentication between the signal repeater unit and the signal sink device.

9. The method of controlling the signal source device as claimed in claims 7 or 8, further including a step of outputting at least one of the video signal and the audio signal to the signal sink device after elapsing a predetermined waiting time, which is set to be longer than a time required for an initial start setting process by the signal sink device, after completion of the equipment authentication.

10. The method of controlling the signal source device as claimed in claim 9, further including the following steps of:
receiving data including at least one of identification information, video output specifications, and audio output specifications of the signal sink device; and
determining the predetermined waiting time on the basis of the received data.

11. The method of controlling the signal source device as claimed in claim 9, further including a step of inputting the predetermined waiting time to the signal source device.

12. The method of controlling the signal source device as claimed in any one of claims 1 to 5, further including the steps of:
generating a non-image silent signal having predetermined specifications after completion of the equipment authentication, and outputting the non-image silent signal to the signal sink device; and
stopping generation and output of the non-image silent signal after elapsing the waiting time.

13. A program which can be executed by a computer, including the respective steps of the method of controlling the signal source device as claimed in any one of claims 7 to 12.

## Amended claims

### Amended claims under Art. 19.1 PCT

**1.** (Amended) A signal source device for generating at least one of a video signal and an audio signal, and outputting the video signal and the audio signal to a signal sink device via a transmission line in conformity with a predetermined standard, the signal source device comprising:
control means, which outputs at least one of the video signal and the audio signal to the signal sink device after completion of equipment authentication with the signal sink device,
wherein the control means outputs at least one of the video signal and the audio signal to the signal sink device after elapsing a predetermined waiting time, which is set to be longer than a time required for an initial start setting process by the signal sink device, after completion of the equipment authentication.

**2.** The signal source device as claimed in claim 1,
wherein the signal source device outputs at least one of the video signal and the audio signal to the signal sink device via a signal repeater unit; and
wherein the control means outputs at least one of the video signal and the audio signal to the signal sink device after completion of equipment authentication between the signal source device and the signal sink device and equipment authentication between the signal repeater unit and the signal sink device.

**3.** (Amended) The signal source device as claimed in claim 1,
wherein the control means receives data including at least one of identification information, video output specifications, and audio output specifications of the signal sink device, and determines the predetermined waitir time on the basis of the received data.

**4.** (Amended) The signal source device as claimed in claim 1, further comprising input means, which inputs the predetermined waiting time to the signal source device.

**5.** (Amended) The signal source device as claimed in claim 1, 2, 3 or 4 further comprising non-image silent signal generating means, which generates a non-image silent signal having predetermined specifications, and outputs the non-image silent signal to the signal sink device,
wherein the control means generates the non-image silent signal after completion of the equipment authentication, controls the non-image silent signal generating means to output the non-image silent signal to the signal sink device, and controls the non-image silent signal generating means to stop generation and output of the non-image silent signal after elapsing the waiting time.

**6.** (Amended) A method of controlling a signal source device for generating at least one of a video signal and an audio signal, and outputting the signals to a signal sink device via a transmission line in conformity with a predetermined standard, the method including the following steps of:
outputting at least one of the video signal and the audio signal to the signal sink device after completion of equipment authentication with the signal sink device; and
outputting at least one of the video signal and the audio signal to the signal sink device after elapsing a predetermined waiting time, which is set to be longer than a time required for an initial start setting process by the signal sink device, after completion of the equipment authentication.

**7.** The method of controlling the signal source device as claimed in claim 6, further including the following steps of:
outputting at least one of the video signal and the audio signal to the signal sink device via signal repeater unit; and
outputting at least one of the video signal and the audio signal to the signal sink device after completion of equipment authentication between the signal source device and the signal sink device, and equipment authentication between the signal repeater unit and the signal sink device.

**8.** (Amended) The method of controlling the signal source device as claimed in claim 6, further including the following steps of:
receiving data including at least one of identification information, video output specifications, and audio output specifications of the signal sink device; and
determining the predetermined waiting time on the basis of the received data.

**9.** (Amended) The method of controlling the signal source device as claimed in claim 6, further including a step of inputting the predetermined waiting time to the signal source device.

**10.** (Amended) The method of controlling the signal source device as claimed in claim 6, 7, 8 or 9, further including the steps of:
generating a non-image silent signal having predetermined specifications after completion of the equipment authentication, and outputting the non-image silent signal to the signal sink device; and
stopping generation and output of the non-image silent signal after elapsing the waiting time.

**11.** (Amended) A program which can be executed by a computer, including the respective steps of the method of controlling the signal source device as claimed in claim 6.
